Europäisches Patentamt

European Patent Office

Office européen des brevets

(19)

(11) **EP 1 103 960 B1**

(12) **EUROPEAN PATENT SPECIFICATION**

(45) Date of publication and mention
of the grant of the patent:
**20.10.2004 Bulletin 2004/43**

(51) Int Cl.7: **G11B 7/135**, G11B 7/125,
G02B 17/08, G11B 7/12

(21) Application number: **00119396.0**

(22) Date of filing: **12.09.2000**

(54) **Objective lens for high-density optical focusing, and optical pickup adopting the same**

Objektivlinse für hochdichte optische Fokussierung, und optische Abtastvorrichtung dafür

Lentille d'objectif pour focalisation optique de haute densité, et dispositif de lecture optique l'utilisant

(84) Designated Contracting States:
**DE FR GB NL**

(30) Priority: **29.09.1999 KR 9941767**

(43) Date of publication of application:
**30.05.2001 Bulletin 2001/22**

(73) Proprietor: **SAMSUNG ELECTRONICS Co. Ltd.**
**Kyungki-do, Seoul (KR)**

(72) Inventors:
• **Yoo, Jang-hoon,**
**102-307 Daerimhyundai 1-cha Apt.**
**Youngdeungpo-gu, Seoul (KR)**
• **Cho, Kun-ho, 103-106 Doosandonga Apt.**
**Suwon-city, Kyungki-do (KR)**
• **Jung, Seung-tae, 207-1405 Donga Apt.**
**Seongnam-city, Kyungki-do (KR)**
• **Lee, Chul-woo, 32-902 Hyundai Apt.**
**Yongsan-gu, Seoul (KR)**
• **Chung, Chong-sam, 835-1306 Hyndai Apt.**
**Seongnam-city, Kyungki-do (KR)**
• **Shin, Dong-ho, 103-201 Sangrokmaeul Life Apt.**
**Seongnam-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 373 700     EP-A- 0 762 403**
**EP-A- 0 910 074     EP-A- 0 918 321**
**WO-A-99/27532      DE-A- 3 119 498**
**DE-A- 4 006 286     JP-A- 63 247 920**
**US-A- 2 656 761     US-A- 4 507 772**

• **PATENT ABSTRACTS OF JAPAN vol. 018, no.**
**581 (P-1822), 7 November 1994 (1994-11-07) & JP**
**06 214154 A (SONY CORP), 5 August 1994**
**(1994-08-05)**
• **NARAHARA T ET AL: "OPTICAL DISC SYSTEM**
**FOR DIGITAL VIDEO RECORDING" JAPANESE**
**JOURNAL OF APPLIED PHYSICS,**
**PUBLICATION OFFICE JAPANESE JOURNAL**
**OF APPLIED PHYSICS. TOKYO, JP, vol. 39, no.**
**2B, PART 1, 11 July 1999 (1999-07-11), pages**
**912-919, XP001005912 ISSN: 0021-4922**

EP 1 103 960 B1

**Description**

The present invention relates to an objective lens having a high numerical aperture (NA) for high-density optical focusing, and an optical pickup adopting the objective lens, and more particularly, to an objective lens for high-density optical focusing, which can be manufactured using existing techniques to have an NA high enough for high-density optical focusing, and an optical pickup adopting the objective lens for high-density recording.

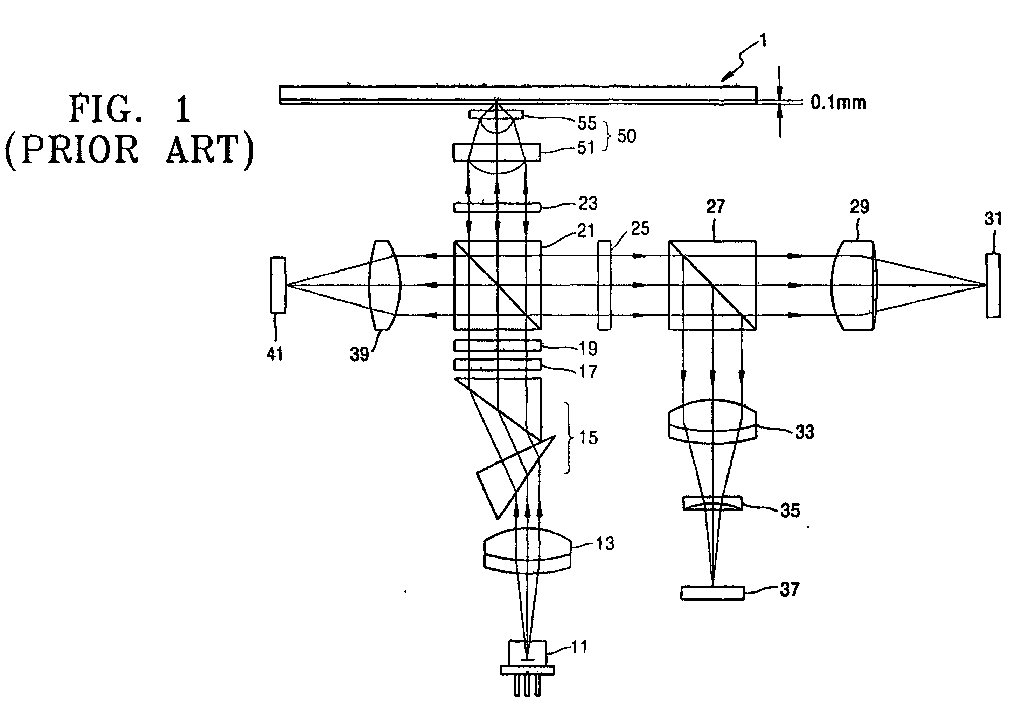

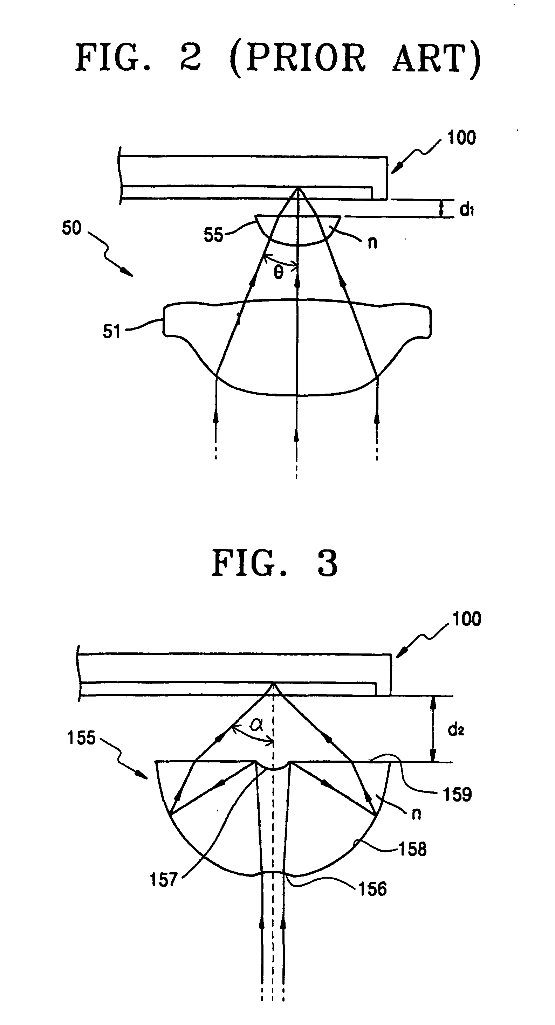

Assuming that a single objective lens is used in an optical system, such an objective lens for use in recording data on and reproducing data from an optical disk has a maximum NA of 0.6, due to the limitation in a manufacturing process. As a result, it is impossible to reduce an allowable error below an aberration of $0.07\lambda_{rms}$. Examples of a conventional objective lens and an optical pickup are shown in Figures 1 and 2.

Referring to Figure 1, the conventional optical pickup for recording/reproducing information was designed to enable a high-density recording of 20 gigabytes on an optical disk 1. The optical pickup includes a light source 11 having a wavelength of 400 nm, a grating 19 for diffracting and transmitting the incident beam, a first polarization beam splitter (PBS) 21 for altering the traveling path of light according to polarization direction, a $\lambda/4$ plate 23 for guiding a circular polarized beam to the optical disk 1, an objective lens unit 50 having an NA of 0.85, a second PBS 27 for transmitting or reflecting the incident light reflected from the optical disk 1 and the first PBS 21, a first photodetector 31 for receiving the light passed through the second PBS 27 and detecting an information signal from the incident light, and a second photodetector 37 for receiving the light reflected from the second PBS 27 and detecting an error signal therefrom.

A collimating lensi 13 for collimating the incident beam, and a beam shaping prism 15 for shaping the incident beam, and a $\lambda/2$ plate 17 for delaying the phase of the incident light are arranged on the optical path between the light source 11 and the grating 19. Another $\lambda/2$ plate 25 for delaying the phase of the incident light is further arranged on the optical path between the first PBS 21 and the second PBS 27. Also, a first condensing lens 29 for condensing the incident parallel beam is arranged between the second PBS 27 and the first photodetector 31. Also, a second condensing lens 33 for condensing the incident parallel beam and an astigmatism lens 35 for causing astigmatism are disposed between the second PBS 27 and the second photodetector 37. A third condensing lens 39 condenses the light emitted from the light source 11 and reflected from the first PBS 21, and a monitoring photodetector 41 for monitoring the optical power of the light source 11 from the light condensed by the third condensing lens 39.

The objective lens unit 50 includes an objective lens 51 for focusing the incident beam and a semi-spherical lens 55, which is arranged between the objective lens 51 and the optical disk 1, for increasing the NA of the objective lens unit 50.

As for the objective lens unit 50 having the configuration above, adoption of the semi-spherical lens 55 further increases the NA of the objective lens unit 50 beyond the NA of 0.6 of the objective lens 51 alone. Referring to Figure 2, the NA of the semi-spherical lens 55 is proportional to the product of sin θ, wherein θ is the maximum incident angle of light into the semi-spherical lens 55, and the refractive index N of the semi-spherical lens 55. Thus, the NA of the objective lens unit 50 can be increased up to 0.85.

In addition, to reduce the size of a light spot focused on the optical disk 1 with such a high NA in the conventional optical pickup as shown in Figure 1, the working distance $d_1$ between the optical disk 1 and the semi-spherical lens 55 must be as small as 0.1 mm. However, such a small distance $d_1$ may hinder the optical disk 1, preventing it from stably seating on a turntable (not shown) and from rotating for operation. In addition, the objective lens moves in the focusing direction within the range of ± 0.7 mm, which is beyond the working distance d1, and thus the focusing servo control must be precisely controlled within the range of 10 nm. Thus, it is difficult to manufacture the optical pickup on a mass production scale.

EP-A-0,910,074 discloses an optical pickup having a first optical system including a double lens type objective lens, generally similar to the discussion on Figures 1 and 2 above. The optical pickup device also includes a second optical system having first and second gap detection photodetectors for detecting the separation between a signal read out surface of an optical disk and a forward lens of the double lens type objective lens unit. A bobbin carries the double lens type objective lens unit of the first optical system, and an objective lens of the second optical system, and an electromagnetic driving unit drives the bobbin. By using the gap detection photodetectors associated with the second optical system, the separation is controlled and operational reliability is improved. This document forms the pre-characterising portion of claim 1.

JP-A-06214154 discloses an objective lens having first and second reflection surfaces and first and second transmitting surfaces to form a catadioptric lens with a comparatively strong bending force. A small-sized optical pickup can be manufactured using this one objective lens.

With a view to solve or reduce the above problems, it is an aim of embodiments of the present invention to provide a lens for high-density focusing, which has a high numerical aperture (NA) and ensures a sufficient working distance with respect to a recording medium, and an optical pickup adopting the objective lens.

According to the present invention there is provided an objective lens unit as set forth in claim 1. Preferred features of the present invention will be apparent from the dependent claims and the description which follows.

Also according to the present invention there is provided an optical pickup as set forth in claim 4 appended hereto. Preferred features of the present invention will be apparent from the dependent claims and the description which follows.

For a better understanding of the invention, and to show how embodiments of the same may be carried into effect, reference will now be made, by way of example, to the accompanying diagrammatic drawings in which:

Figure 1 is a diagram showing the optical arrangement of a conventional optical pickup adopting an objective lens unit having a semi-spherical lens for high-density focusing;

Figure 2 is a diagram showing the optical arrangement of the objective lens unit shown in Figure 1;

Figure 3 is a diagram showing the optical arrangement of an objective lens for high-density focusing according to a preferred embodiment of the present invention, which is designed to be suitable for a parallel incident beam;

Figures 4 and 5 illustrate the optical arrangement of other embodiments of the objective lens for high-density focusing according to the present invention, which are designed to be suitable for a condensing incident beam;

Figure 6 is a diagram showing the optical arrangement of an optical pickup adopting the high-density focusing objective lens according to a preferred embodiment of the present invention;

Figure 7 shows the optical arrangement of the main portions in the optical pickup of Figure 6 when a relatively thin optical disk is adopted; and

Figure 8 shows the optical arrangement of the main portions in the optical pickup of Figure when a relatively thick optical disk is adopted.

Referring to Figure 3, an objective lens 155 for high-density focusing according to the present invention includes a first transmitting portion 156 for divergently transmitting incident light, a first reflecting portion 157 arranged facing to the first transmitting portion 156, for divergently reflecting the incident light, a second reflecting portion 158 arranged around the first transmitting portion 156, for condensing the light reflected by the first reflecting portion 157, and a second transmitting portion 159 for refracting and transmitting the light reflected from the second reflecting portion 158.

The second transmitting portion 159 is positioned facing the optical disk 100. The first and second reflecting portions 157 and 158, and the first and second transmitting portions 156 and 159 are designed such that the working distance d2 between the second transmitting portion 159 and an optical disk 100 is larger than the working distance $d_1$ (see Figure. 2) in a conventional optical pickup.

Preferably, the first transmitting portion 156, for removing optical field aberration, has concave curvature. Also, the first transmitting portion 156 is designed with spherical and aspherical surfaces for minimum aberration. The first reflecting portion 157 has a convex reflecting surface for reflecting the incident light at a maximum angle, which maintains a high NA of 0.6 or more. The reflecting surface of the first reflecting portion 157 is formed to be convex toward the first transmitting portion 156. The second reflecting portion 158, which has a concave reflecting surface for minimizing optical aberration, such as spherical aberration and coma aberration, reflects the incident light reflected by the first reflecting portion 157 toward the second transmitting portion 159. On the other hand, when light travels back through the lense after having been reflected from the optical disk 100, the second reflecting portion 158 reflects back the incident light from the second transmitting portion 159 toward the first reflecting portion 157. The second transmitting portion 159 has a planar surface, and thus it can be easily processed. Preferably, the space enclosed by the first transmitting portion 156, the second reflecting portion 158, the first reflecting portion 157 and the second transmitting portion 159 is filled with an optical material having a refractive index n different from that of air, which enables the light reflected from the second reflecting portion 156 to be focused through the second transmitting potion 159 toward an optical disc 100.

Figure 3 illustrates an example of the objective lens 155 for focusing parallel incident light on the optical disk 100. For this case, it is preferable that the optical disk 100 has a thickness of 0.4 mm or less, but more preferably, of 0.1 mm, so as to overcome coma aberration and astigmatism which occur at the objective lens 155 having a high NA.

Preferably, to form a light spot suitable for reproduction from the optical disk 100, the diameter of the first reflecting portion 157 and the outer diameter of the second transmitting portion 159 satisfy condition (1) below. This is for shielding the central beam from the beam entering the first reflecting portion 157, so that the effect of spherical aberration can be sharply cut down and the size of the light spot can be minimized.

$$0.1 < \frac{\textit{diameter of first reflecting portion}}{\textit{outer diameter of second transmitting portion}} < 0.5 \qquad (1)$$

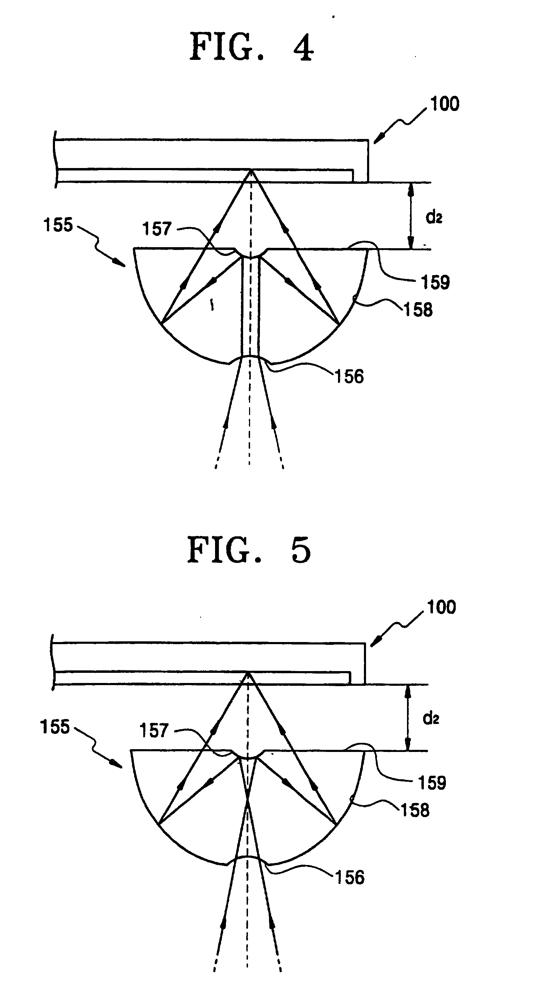

Figures 4 and 5 show the optical arrangement of an objective lens designed to be suitable for a condensing incident beam. Each objective lens 155 shown in Figures 4 and 5 has the first and second transmitting portions 156 and 159, and the first and second reflecting portions 157 and 158, like the objective lens described with reference to Figure 3. However, the design data are different from those of the objective lens of Figure 3.

Referring to Figure 4, a predetermined condensing beam entering the first transmitting portion 156 is divergently reflected from the first reflecting portion 157, and focused by the second reflecting portion 157 to form a high-density light spot on the optical disk 100.

As for a condensing beam entering the first transmitting portion 156 at a greater incident angle, referring to Figure 5, the incident beam condenses and spreads out again while passing through the first transmitting portion 156, and then is divergently reflected by the first reflecting portion 157. Then, the diverging beam is reflected and focused by the second reflecting portion 157 to form a high-density light spot on the optical disk 100.

To minimize the size of the light spot focused on the optical disk 100 with increased working distance $d_2$, it is preferable that in the objective lens 155 described with reference to Figures 3 through 5, the maximum angle $\alpha$ between the optical axis and the peripheral beam emitted from the second transmitting portion 159 after having passed through the first transmitting portion 156 and been reflected by the first and second reflecting portions 157 and 158 satisfies condition (2).

$$30° \leq \alpha \leq 65° \qquad (2)$$

Two examples of the optical data for the objective lens 155 having the above configuration are shown in Tables 1 and 2.

Tables 1 and 2 show the design data of the objective lens 155 suitable for a parallel incident beam when the working distance $d_2$ is 1.1 mm and 0.2 mm, respectively. Table 3 shows the aspherical coefficients of the aspherical surfaces listed in Tables 1 and 2.

Table 1

|  | Radius (mm) | Thickness (mm) | Refractive Index | Dispersion |
|---|---|---|---|---|
| First transmitting surface | ∞ (aspherical surface 1) | 2.586105 | 1.526 | 50 |
| First reflecting surface | 0.38706 | -2.586105 | 1.526 | 50 |
| Second reflecting surface | 3.42277 (aspherical surface 2) | 2.655523 | 1.526 | 50 |
| Second transmitting surface | ∞ | 1.100000 | - | - |
| Disk | ∞ | 0.100000 | 1.583 | 50 |

Table 2

|  | Radius (mm) | Thickness (mm) | Refractive Index | Dispersion |
|---|---|---|---|---|
| First transmitting surface | ∞ | 0.574577 | 1.526 | 50 |
| First reflecting surface | 0.08600 | -0.574577 | 1.526 | 50 |
| Second reflecting surface | 0.76177 (aspherical surface 3) | 0.590000 | 1.526 | 50 |
| Second transmitting surface | ∞ | 0.198714 | - | - |
| Disk | ∞ | 0.100000 | 1.583 | 50 |

Table 3

| Aspherical coefficient | K | A | B | C | D |
|---|---|---|---|---|---|
| Aspherical surface 1 | 0.000000 | 0.281823E+01 | -0.244324E+03 | 0.757918E+04 | -0.962123E+05 |
| Aspherical surface 2 | -0.257566 | 0.341730E-03 | -0.232088E-04 | 0.735984E-05 | -0.176553E-05 |
| Aspherical surface 3 | -0.086297 | -0.782050E-02 | -0.147428+00 | 0.646999E+00 | -0.347888E+01 |

Using the objective lens 155 having the above configurations according to the present invention maintains the working distance $d_2$ to be 0.2 mm and 1.1 mm, respectively, with a higher NA of 0.6 or more, which eliminates the problem of lens-to-disk interference. The objective lens having a high NA according to the present invention is applicable to miniature optical systems for microscopes, exposure apparatuses for use in the manufacture of semiconductor devices, and mastering apparatuses for manufacturing disks.

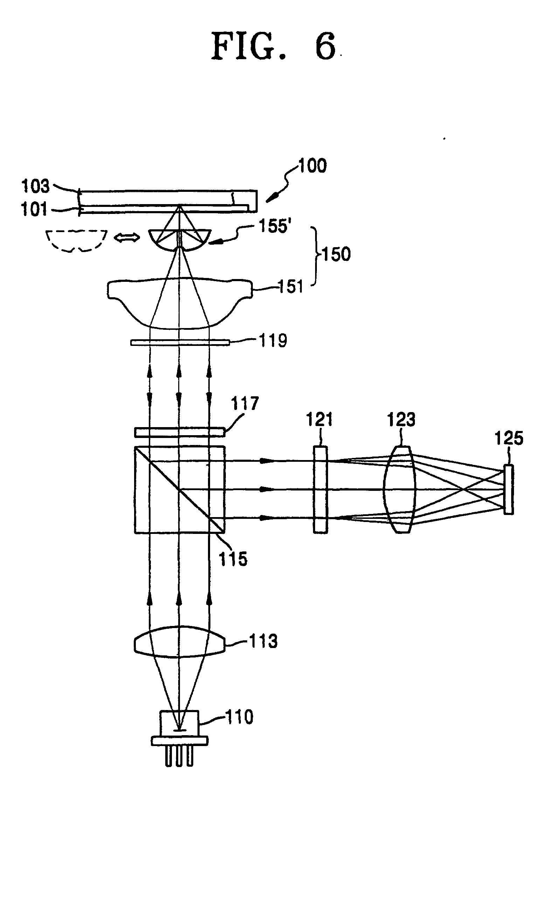

Referring to Figure 6, an embodiment of an optical pickup includes a light source 110 for emitting a laser beam, an optical path changing means for changing the traveling path of the incident light, an objective lens unit 150 for focusing the incident beam to form a light spot on an optical disk 100, and a photodetector 125 for receiving the light reflected from the optical disk 100 to detect information and error signals. The optical pickup shown in Figure 6 is compatible with an optical disk 101 having a thickness of 0.4 mm or a high recording density of about 20 gigabytes, a digital versatile disk (DVD) 103 having a thickness of 0.6 mm, and a compact disk (CD, not shown) having a thickness of 1.2 mm.

The light source 110 may be a semiconductor laser for emitting light of a short wavelength of about 400 nm. The optical path changing means includes a polarization beam splitter (PBS) 115 for transmitting or reflecting the components of the incident beam according to their polarization, a $\lambda/4$ plate 117 arranged on the optical path between the PBS 115 and the optical disk 100, for delaying the phase of the incident beam. A collimating lens 113 for collimating the incident beam may further be arranged on the optical path between the light source 110 and the PBS 115.

The optical lens unit 150 includes a first objective lens 151 having an NA of 0.6 suitable for the DVD 103, a second objective lens 155' optionally placed on the optical path between the first objective lens 151 and the optical disk 100, and a variable diaphragm 119 arranged on the optical path before the first objective lens 151.

As shown in Figure 7, when the high-density optical disk 101 being relatively thin is adopted, the objective lens unit 150 arranged on the optical path is constituted to include both the first and second objective lenses 151 and 155', to form a light spot on the high-density optical disk 101. On the other hand, if a relatively thick DVD 103 is adopted, the second objective lens 155' is excluded from the objective lens unit 150, so that the incident light is focused onto the DVD 103 by only the first objective lens 151. Here, placing the second objective lens 155' into and removing it from the optical path can be achieved using a rotary-type or solenoid-type driving motor. As for using the rotary type driving motor, the second objective lens 155' is mounted on a rotary plate rotating by the motor, and then the rotation of the rotary plate is controlled to place the second objective lens 155' into or remove it from the optical path. Such slidable motor driving techniques are well known to those skilled in the art, and thus description thereof will be omitted.

The first objective lens 151 has a NA of 0.6 and is suitable to form a light spot on the DVD 103 having a thickness of 0.6 mm. Preferably, the first objective lens 151 has an annular shielding type configuration, which was disclosed in US Patent Nos. 5,665,957; 5,822,135; 5,909,424; and 5,987,924. As for such an annular shielding type objective lens, the focal position is separately adjusted for a near-axis region and a far-axis region, so that the objective lens is compatible with a CD (not shown) having a thickness of 1.2 mm.

The second objective lens 155' has the same configuration as that of the objective lens 155 shown in Figures 3 through 5. That is, the second objective lens 155' includes the first transmitting portion 156 for divergently transmitting the incident beam, the first reflecting portion 156 arranged facing the first transmitting portion 156, for divergently reflecting the incident beam, the second reflecting portion 158 formed around the first transmitting portion 156, for focusing the light reflected by the first reflecting portion 157, and the second transmitting portion 159 for reflecting and transmitting the light reflected by the second reflecting portion 158. Preferably, the maximum angle $\alpha$ between the optical axis and the peripheral beam incident on the optical disk 100 through the first transmitting portion 156, the first and second reflecting portions 157 and 158, and the second transmitting portion 159 satisfies formula (2) above.

The first and second transmitting portions 156 and 159, and the first and second reflecting portions 157 and 158 have the same configuration and function as those of the objective lens 155 of Figures 3 through 5, and thus description thereof will be omitted.

Incorporation of the second objective lens 155' into the optical path enables the objective lens unit 150 to have a high NA of 0.85 along with the first objective lens 151 having a NA of 0.6. As a result, a light spot can be accurately formed with a high-density on the high-density optical disk 101. Preferably, the high-density optical disk 101 has a thickness of 0.4 mm or less, more preferably, 0.1 mm or less, in consideration of coma aberration and astigmatism.

For recording information on or reproducing from the high-density optical disk 101, the variable diaphragm 119, a wavelength selective variable diaphragm, focuses the incident beam through its narrow central region on the first transmitting portion 156. Meanwhile, for recording information on or reproducing from the DVD 103, the incident beam passes through a large portion of the variable diaphragm 119 to form a light spot on the DVD 103.

The photodetector 125, which receives the incident beam reflected by the optical disk 100 and passed through the PBS 115, is divided into a plurality of portions for independent photoelectric conversion. The configuration of such a photodetector 125 is well known to one skilled in the art, and thus description thereof will be omitted.

A holographic optical element (HOE) 121 for diffracting and transmitting the incident light to split the beam into an error signal and an information signal, and a condensing lens 123 for condensing the light from the HOE 121, are further disposed along the optical path between the PBS 115 and the photodetector 125.

The objective lens having the above structure according to the present invention is advantageous in that interference between the objective lens and the optical disk can be eliminated with an increased working distance $d_2$ of 0.2 mm or 1.1 mm at a high NA of 0.6 or more. The objective lens according to the present invention can be adopted as a lens for microscopes, exposure apparatuses for use in the manufacture of semiconductor devices, and mastering apparatuses for use in the manufacture of disks with a high NA, thereby minimizing the size of the optical system.

In the optical pickup according to the present invention, a second objective lens can be selectively disposed along the optical path while the working distance $d_2$ is maintained at 0.2 mm, so that the NA of the objective lens unit including the first objective lens of the optical pickup can be increased to 0.8. Also, interference with the optical disk can be eliminated when information is recorded on or reproduced from a high-density optical disk having a thickness of 0.4 mm or less. Another advantage of the optical pickup is its compatibility with DVD or CD by selective placement or removal of the second objective lens into or away from the optical path.

Although a few preferred embodiments have been shown and described, it will be appreciated by those skilled in the art that various changes and modifications might be made without departing from the scope of the invention, as defined in the appended claims.

## Claims

1. An objective lens unit, comprising:

    a first objective lens (151) for focusing incident light; and

    a second objective lens (155) arranged on the optical path between the first objective lens (151) and an optical disk or other substrate, to further focus the light condensed by the first objective lens (151);

    **characterised in that**:

    the second objective lens (155) includes:

        a first transmitting portion (156) placed at a relatively near-axis region from the optical axis, for divergently transmitting an incident beam;

        a first reflecting portion (157) for divergently reflecting the incident beam, facing the first transmitting portion (156);

        a second reflecting portion (158) formed at a relatively far-axis region around the first transmitting portion (156), for focusing and reflecting the light reflected from the first reflecting portion (157); and

        a second transmitting portion (159) formed at a relatively far-axis region around the first reflecting portion (157), for refracting and transmitting the light focused by the second reflecting portion (158); and

        the maximum angle $\alpha$ between the optical axis and the peripheral beam passing through the second transmitting portion (159) after having passed through the first transmitting portion (156) and been reflected by the first and second reflecting portions (157,158) satisfies the condition of $30^\circ \leq \alpha \leq 65^\circ$.

2. The objective lens unit of claim 1, wherein the space enclosed by the first and second transmitting portions (156; 159) and the first and second reflecting portions (157;158) is filled with an optical material.

3. The objective lens unit of claim 1 or 2, wherein:

the diameter of the first reflecting portion (157) and the outer diameter of the second transmitting portion (159) satisfy the following condition, to shield the central light entering the first reflecting portion for reduced spherical aberration

$$0.1 < \frac{diameter\ of\ first\ reflecting\ portion}{outer\ diameter\ of\ second\ transmitting\ portion} < 0.5$$

4. An optical pickup comprising:

a light source (110) for emitting a laser beam;

an optical path changing means (115) for changing the traveling path of incident light;

an objective lens unit (150) as claimed in claims 1, 2 or 3 for focusing an incident beam to form a light spot on the optical disk; and

a photodetector (125) for receiving incident light reflected from the optical disk and passed through the objective lens and the optical path changing means.

5. The optical pickup of claim 4, wherein the second objective lens (155) is optionally placed into the optical path between the first objective lens (151) and the optical disk, such that both the first and second objective lenses (151;155) are engaged to form a light spot on a relatively thin high-density optical disk, while only the first objective lens (151) is used to form a light spot on a relatively thick optical disk.

6. The optical pickup of claim 4 or 5, wherein the objective lens unit further comprises a wavelength selective variable diaphragm (119) having an aperture whose size varies depending on the wavelength of an incident beam.

**Patentansprüche**

1. Objektivlinseneinheit, die umfasst:

eine erste Objektivlinse (151), die auftreffendes Licht fokussiert; und

eine zweite Objektivlinse (155), die auf dem Lichtweg zwischen der ersten Objektivlinse (151) und einer optischen Platte oder einem anderen Träger angeordnet ist, um das durch die erste Objektivlinse (151) gesammelte Licht weiter zu fokussieren;

**dadurch gekennzeichnet, dass**:

die zweite Objektivlinse (155) enthält:

einen ersten durchlassenden Abschnitt (156), der in einem relativ achsennahen Bereich zu der optischen Achse angeordnet ist, um einen auftreffenden Strahl divergierend durchzulassen;

einen ersten reflektierenden Abschnitt (157), der den auftreffenden Strahl divergierend reflektiert und dem ersten durchlassenden Abschnitt (156) zugewandt ist;

einen zweiten reflektierenden Abschnitt (158), der in einem relativ achsenfemen Bereich um den ersten durchlassenden Abschnitt (156) herum ausgebildet ist, um das von dem ersten reflektierenden Abschnitt (157) reflektierte Licht zu fokussieren und zu reflektieren; und

einen zweiten durchlassenden Abschnitt (159), der in einem retativ achsenfernen Bereich um den ersten reflektierenden Abschnitt (157) herum ausgebildet ist, um das von dem zweiten reflektierenden Abschnitt (158) fokussierte Licht zu brechen und durchzulassen; und

wobei der maximale Winkel $\alpha$ zwischen der optischen Achse und dem Randstrahl, der durch den zweiten durchlassenden Abschnitt (159) hindurchtritt, nachdem er durch den ersten durchlassenden Abschnitt (156) hindurchgelassen und von dem ersten sowie dem zweiten reflektierenden Abschnitt (157, 158) reflektiert worden ist, die Bedingung $30° \leq \alpha \leq 65°$ erfüllt.

2. Objektivlinseneinheit nach Anspruch 1, wobei der von dem ersten und zweiten durchlassenden Abschnitt (156; 159) sowie dem ersten und dem zweiten reflektierenden Abschnitt (157; 158) umschlossene Raum mit einem optischen Material gefüllt ist.

3. Objektivlinseneinheit nach Anspruch 1 oder 2, wobei:

   der Durchmesser des ersten reflektierenden Abschnitts (157) und der Außendurchmesser des zweiten durchlassenden Abschnitts (159) die folgende Bedingung erfüllen, um das Mittellicht, das in den ersten reflektierenden Abschnitt eintritt, für verringerte sphärische Aberration abzuschirmen.

$$0,1 < \frac{\text{Durchmesser des ersten reflektierenden Abschnitts}}{\text{Außendurchmesser des zweiten durchlassenden Abschnitts}} < 0,5$$

4. Optischer Abnehmer, der umfasst:

   eine Lichtquelle (110), die einen Laserstrahl emittiert;

   eine Lichtweg-Änderungseinrichtung (115), die den Laufweg von auftreffendem Licht ändert;

   eine Objektivlinseneinheit (150) nach den Ansprüchen 1, 2 oder 3, die einen auftreffenden Strahl fokussiert, um einen Lichtpunkt auf der optischen Platte auszubilden; und

   einen Fotodetektor (125), der von der optischen Platte reflektiertes und durch die Objektivlinse sowie die Lichtweg-Änderungseinrichtung hindurchtretendes, auftreffendes Licht empfängt.

5. Optischer Abnehmer nach Anspruch 4, wobei die zweite Objektivlinse (155) wahlweise auf dem Lichtweg zwischen der ersten Objektivlinse (151) und der optischen Platte angeordnet wird, so dass sowohl die erste als auch die zweite Objektivlinse (151; 155) dazu beitragen, einen Lichtpunkt auf einer relativ dünnen, hochdichten optischen Platte auszubilden, während nur die erste Objektivlinse (151) dazu dient, einen Lichtpunkt auf einer relativ dicken optischen Platte auszubilden.

6. Optischer Abnehmer nach Anspruch 4 oder 5, wobei die Objektivlinseneinheit des Weiteren eine wellenlängenselektive veränderliche Blende (119) umfasst, die eine Öffnung hat, deren Größe in Abhängigkeit von der Wellenlänge eines auftreffenden Strahls variiert.

**Revendications**

1. Unité d'objectifs, comportant :

   un premier objectif (151) pour focaliser une lumière incidente, et
   un second objectif (155) agencé sur le trajet optique entre le premier objectif (151) et un disque optique ou un autre substrat, pour focaliser en outre la lumière condensée par le premier objectif (151),

   **caractérisée en ce que** :

   le second objectif (155) comporte :

   une premier partie de transmission (156) placée sur une région relativement proche de l'axe par rapport à l'axe optique, pour transmettre de manière divergente un faisceau incident,
   une première partie de réflexion (157) pour réfléchir de manière divergente le faisceau incident, qui est en vis-à-vis avec la première partie de transmission (156),
   une seconde partie de réflexion (158) formée sur une région relativement éloignée de l'axe autour de la première partie de transmission (156), pour focaliser et réfléchir la lumière réfléchie par la première partie de réflexion (157), et

une seconde partie de transmission (159) formée sur une région relativement éloignée de l'axe autour de la première partie de réflexion (157), pour réfracter et transmettre la lumière focalisée par la seconde partie de réflexion (158), et

l'angle maximal $\alpha$ entre l'axe optique et le faisceau périphérique passant à travers la seconde partie de transmission (159) après être passé à travers la première partie de transmission (156) et avoir été réfléchi par les première et seconde parties de réflexion (157, 158), satisfait à la condition suivante $30° \leq \alpha \leq 65°$.

2. Unité d'objectifs selon la revendication 1, dans laquelle l'espace délimité par les première et seconde parties de transmission (156 ; 159) et les première et seconde parties de réflexion (157 ; 158) est rempli d'un matériau optique.

3. Unité d'objectifs selon la revendication 1 ou 2, dans laquelle :

le diamètre de la première partie de réflexion (157) et le diamètre extérieur de la seconde partie de transmission (159) satisfont à la condition suivante, pour protéger la lumière centrale entrant dans la première partie de réflexion afin de réduire une aberration sphérique

$$0{,}1 < \frac{\text{diamètre de la première partie de réflexion}}{\text{diamètre extérieur de la seconde partie de transmission}} < 0{,}5$$

4. Tête de lecture optique comportant :

une source de lumière (110) pour émettre un faisceau laser,

des moyens de changement de trajet optique (115) pour changer le trajet de déplacement de la lumière incidente,

une unité d'objectifs (150) selon l'une quelconque des revendications 1, 2 ou 3, pour focaliser un faisceau incident afin de former un spot lumineux sur le disque optique, et

un photodétecteur (125) pour recevoir une lumière incidente réfléchie par le disque optique et qui est passée à travers l'objectif et les moyens de changement de trajet optique.

5. Tête de lecture optique selon la revendication 4, dans laquelle le second objectif (155) est placé de manière optionnelle dans le trajet optique entre le premier objectif (151) et le disque optique, de sorte que les premier et second objectifs (151 ; 155) sont tous deux mis en prise pour former un spot lumineux sur un disque optique à haute densité relativement mince, alors que seul le premier objectif (151) est utilisé pour former un spot lumineux sur un disque optique relativement épais.

6. Tête de lecture optique selon la revendication 4 ou 5, dans laquelle l'unité d'objectifs comporte de plus un diaphragme variable sélectif en termes de longueur d'onde (119) ayant une ouverture dont la taille varie en fonction de la longueur d'onde d'un faisceau incident.

FIG. 1
(PRIOR ART)

# FIG. 2 (PRIOR ART)

# FIG. 3

## FIG. 4

## FIG. 5

# FIG. 6.